Europäisches Patentamt

European Patent Office

Office européen des brevets

(19)

(11) Veröffentlichungsnummer : **0 323 595 B1**

(12) **EUROPÄISCHE PATENTSCHRIFT**

(45) Veröffentlichungstag der Patentschrift :
26.04.95 Patentblatt 95/17

(51) Int. Cl.$^6$ : **G06F 1/02**

(21) Anmeldenummer : 88121077.7

(22) Anmeldetag : 16.12.88

(54) **Schaltunganordnung zum Erzeugen eines elektrischen Sinussignals mit veränderlicher Frequenz.**

(30) Priorität : 06.01.88 DE 3800141

(43) Veröffentlichungstag der Anmeldung :
12.07.89 Patentblatt 89/28

(45) Bekanntmachung des Hinweises auf die
Patenterteilung :
26.04.95 Patentblatt 95/17

(84) Benannte Vertragsstaaten :
DE ES FR GB IT SE

(56) Entgegenhaltungen :
EP-A- 0 208 141
ELECTRICAL DESIGN NEWS, Band 17, Nr. 15,
1. August 1972, Seiten 38-41; K.HUEHNE:
"Programmable ROMs offer a digital approach to waveform synthesis"
NACHRICHTENTECHNIK ELEKTRONIK, Band
36, Nr. 9, 1986, Seiten 322-324; H.
SIGGELKOW et al.:
"Nebenwellenunterdrückung bei der direkten
digitalenFrequenzsynthese"

(73) Patentinhaber : DODUCO GMBH + Co Dr.
Eugen Dürrwächter
Im Altgefäll 12
D-75181 Pforzheim (DE)

(72) Erfinder : Normann, Norbert, Dr. Dipl.-Phys.
Hauptstrasse 384
D-7532 Niefern-Öschelbronn (DE)
Erfinder : Schulze, Gunther, Dipl.-Ing.
Lutherstrasse 3
D-7536 Ispringen (DE)
Erfinder : Uhl, Günter, Dr. Dipl.-Ing.
Landhausstrasse 45
D-7267 Unterreichenbach (DE)

(74) Vertreter : Twelmeier, Ulrich, Dipl.Phys. et al
Patentanwälte Dr. Rudolf Bauer
Dipl.-Ing.Helmut Hubbuch, Dipl.Phys. Ulrich
Twelmeier
Westliche Karl-Friedrich-Strasse
29-31
D-75172 Pforzheim (DE)

EP 0 323 595 B1

**Beschreibung**

Die ältere, aber nicht vorveröffentlichte DE-A 36 43 389 offenbart eine mit geringem Aufwand zu verwirklichende, digital arbeitende Schaltungsanordnung zum Erzeugen eines elektrischen Sinussignals mit kontinuierlich veränderlicher Frequenz, wobei die Schaltungsanordnung zur Glättung des Sinussignals keines abstimmbaren Tiefpaßfilters bedarf.

Bei der in der DE-A 36 43 389 beschriebenen Schaltungsanordnung werden die Momentanwerte (Funktionswerte) der Sinusfunktion für eine volle Sinusperiode mit maximaler Stützstellenzahl No oder nur für eine halbe Periode abgelegt. Im zuletzt genannten Fall halbiert sich die Stützstellenzahl auf No/2 und zur Nachbildung des Sinusverlaufs in der zweiten Halbperiode verwendet man in diesem Fall die für die erste Halbperiode gespeicherten Funktionswerte und kehrt deren Vorzeichen um.

Wird eine solche Schaltungsanordnung in einen integrierten Schaltkreis überführt, so wird die Größe des für den integrierten Schaltkreis benötigten Chips im wesentlichen durch den Festwertspeicher bestimmt, in welchem die Funktionswerte der Sinusfunktion abgelegt sind.

Die Größe des Chips geht direkt in den Preis für den integrierten Schaltkreis ein, der mithin wesentlich durch die Größe des Festwertspeichers mitbestimmt ist.

Eine Schaltungsanordnung mit den im Oberbegriff des Anspruchs 1 angegebenen Merkmalen ist aus ELECTRICAL DESIGN NEWS Band 17, Nr. 15 vom 01.08.1972, Seiten 38-41 bekannt. Bei dieser bekannten Schaltungsanordnung wird der Verlauf des Sinussignals mit den Funktionswerten eines Quadranten als Polygonzug dargestellt. Die Frequenzabstimmung geschieht grob durch einen kapazitiven Stufenschalter und innerhalb der dadurch gegebenen Frequenzabstufungen durch kontinuierliche Abstimmung des Oszillators mittels einer Potentiometerschaltung. Diese Kombination ist in Relation zur Verwendung eines integrierten Schaltkreises relativ aufwendig; eine numerische Kontrolle durch den IC selbst ist nicht vorgesehen.

Die Zeitschrift NACHRICHTENTECHNIK ELEKTRONIK, Band 36, Nr. 9, 1986, Seiten 322-324 offenbart andererseits einen digitalen Sinusgenerator, bei welchem die Frequenz grob eingestellt wird, indem die Oszillatorfrequenz durch $2^n$ geteilt wird, wobei in den dadurch gegebenen Frequenzstufen die Frequenz in kleineren, allerdings diskreten Schritten verstellt werden kann. Hierbei ist zwar eine numerische Kontrolle der Frequenzeinstellung möglich, aber nur in diskreten Schritten.

Der vorliegenden Erfindung liegt deshalb die Aufgabe zugrunde, einen preiswerten aber gleichwohl genauen und vielfältig brauchbaren digitalen Sinusgenerator zu schaffen.

Diese Aufgabe wird gelöst durch eine Schaltungsanordnung mit den im Anspruch 1 angegebenen Merkmalen.

Der Vorteil der Erfindung liegt darin, dass zur Erzeugung des sinusförmigen Signals nur noch die Funktionswerte für eine Viertelperiode der Sinusfunktion im Speicher abgelegt werden, so dass gegenüber der Schaltungsanordnung in der DE-A 36 43 389 der Speicherbedarf für die Funktionswerte des Sinus halbiert ist, ohne dass die Genauigkeit, mit der die Sinusfunktion nachgebildet wird, beeinträchtigt ist. Mit den für eine Viertelperiode gespeicherten Funktionswerte läßt sich sogar nicht nur ein Sinussignal, sondern gleichzeitig im Zeitmultiplexverfahren ein phasenstarr mit dem Sinussignal gekoppeltes Cosinussignal erzeugen. Diesem Zweck dient die im Anspruch 2 angegebene Weiterbildung der Schaltungsanordnung.

Der weiteren Erläuterung der Erfindung dienen die beigefügten Zeichnungen.

Figur 1        ist ein Blockschaltbild der Schaltungsanordnung, und
Figur 2        ist eine diagrammatische Darstellung des Verlaufs eines Sinussignals und eines Cosinussignals, welche gleichzeitig phasenstarr durch die Schaltungsanordnung erzeugt werden können.

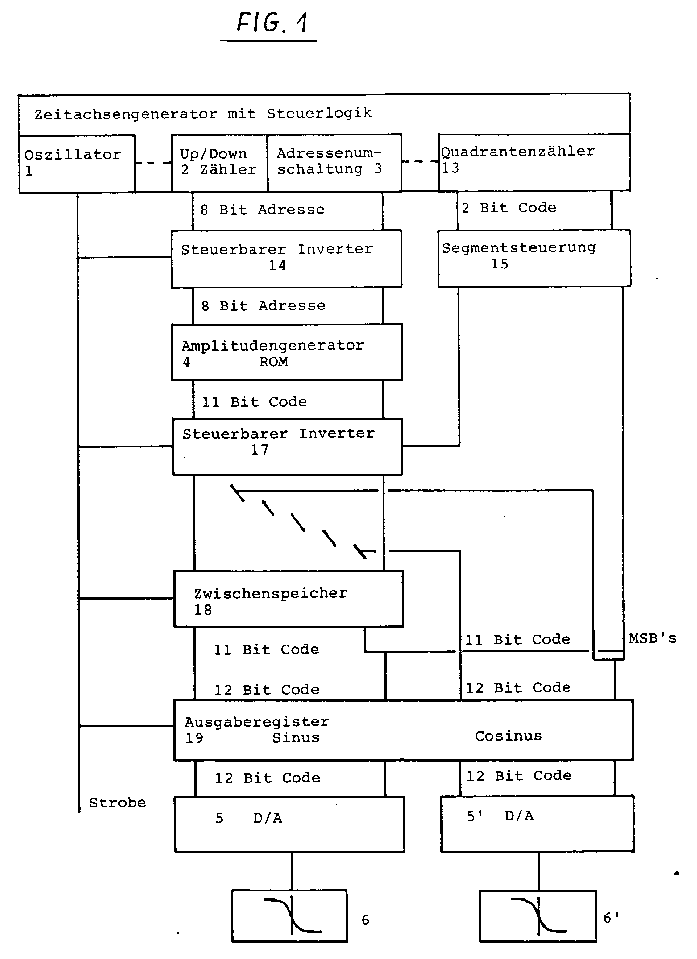

Die in Figur 1 dargestellte Schaltungsanordnung enthält einen abstimmbaren Oszillator 1, einen dem Oszillator nachgeschalteten vorwärts und rückwärts zählenden Adreßzähler 2, eine dem Adreßzähler 2 nachgeschaltete, steuerbare Adreßumschalteinrichtung 3, einen der Adreßumschalteinrichtung 3 nachgeschalteten, steuerbaren Inverter 14, einen dem Inverter 14 nachgeschalteten, programmierbaren Festwertspeicher 4, einen dem Speicher 4 nachgeschalteten, zweiten steuerbaren Inverter 17, einen dem Inverter 17 nachgeschalteten Zwischenspeicher 18, ein dem Zwischenspeicher nachgeordnetes Ausgaberegister 19 mit einem ersten Ausgang für ein Sinussignal und mit einem zweiten Ausgang für ein Cosinussinal, und zwei dem Ausgaberegister 19 nachgeschaltete Digital-zu-Analog-Wandler 5 und 5′, deren Ausgangssignale jeweils einem Tiefpassfilter 6 bzw. 6′ zugeführt werden. Neben dem Adreßzähler 2 sind noch ein Quadratenzähler 13 und ein Steuermodul 15 vorgesehen, durch welchen der zweite steuerbare Inverter 17 gesteuert wird.

Das zu erzeugende Sinussignal wird mit Hilfe von Funktionswerten erzeugt, die im Speicher 4 abgelegt sind, wobei maximal No Stützstellen für eine volle Sinusperiode zur Verfügung stehen. Im Speicher 4 sind jedoch nur die Funktionswerte für eine viertel Periode abgelegt, vorzugsweise für das erste Viertel der Sinusfunktion, also für No/4 Stützstellen. Diese Stützstellen sind im Speicher 4 mit den ganzen Zahlen von $-\dfrac{No}{8}$

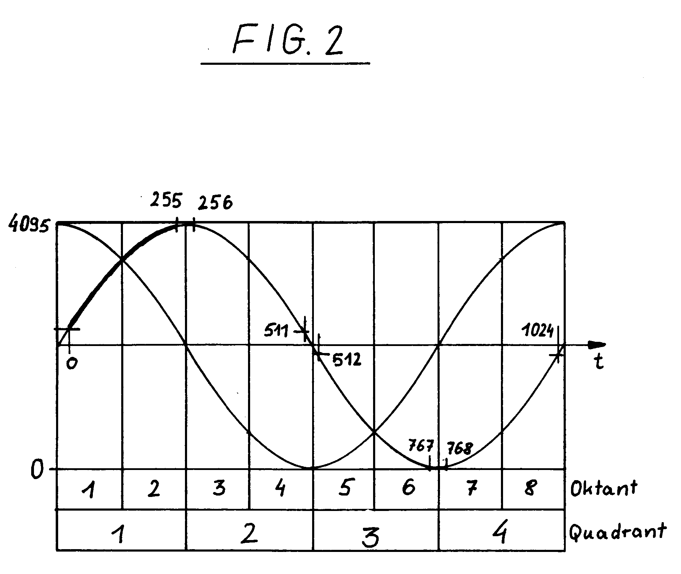

und $+ \frac{No}{8}$ adressiert. Zum Auslesen der Funktionswerte der ersten Viertelperiode der Sinusfunktion (erster Quadrant in Fig. 2) durchläuft der vom Oszillator 1 getaktete Adreßzähler 2 den Zahlenbereich von - No/8 bis + No/8 und liest nacheinander die eingespeicherten Funktionswerte aus dem Speicher 4, von wo sie über den zweiten steuerbaren Inverter 17, den Zwischenspeicher 18 und das Ausgaberegister 19 in den Digital-zu-Analog-Wandler 5 übertragen werden. Nachdem der Adreßzähler 2 entsprechend der vorgesehenen Anzahl von Adressen seinen höchstmöglichen Zählerstand erreicht hat, wird seine Zählrichtung umgekehrt und es werden nun die Funktionswerte in umgekehrter Reihenfolge aus dem Speicher 4 gelesen und zur Bildung der zweiten Viertelperiode des Sinussignals (zweiter Quadrant in Fig. 2) in den Digital-zu-Analog-Wandler 5 übertragen. Mathematisch entspricht das einer Spiegelung des im ersten Quadranten liegenden Abschnitts der Sinuskurve an der Grenze zwischen dem ersten und dem zweiten Quadranten. Hat der Adreßzähler seinen niedrigsten Zählerstand erreicht, wird seine Zählrichtung erneut umgekehrt. Gleichzeitig gibt der Quadrantenzähler 13 ein Signal an den Steuermodul 15 ab, der daraufhin den zweiten steuerbaren Inverter 17 umsteuert, so dass dieser das Vorzeichen der aus dem Speicher 4 ausgelesenen Funktionswerte für die Dauer der nächsten Halbperiode umkehrt, so dass in der zweiten Halbperiode die negative Halbwelle des Sinussignals gebildet wird. An der Grenze vom vierten zum fünften Quadranten gibt der Quadrantenzähler 13 das nächste Signal an den Steuermodul 15 ab, welcher den zweiten steuerbaren Inverter 17 daraufhin umsteuert, woraufhin sich der beschriebene Zyklus für die nächste Periode des Sinussignals wiederholt.

Simultan zur Erzeugung des Sinussignals kann ein Cosinussignal erzeugt werden, welches phasenstarr mit dem Sinussignal gekoppelt ist. Mathematisch wird die Cosinusfunktion dadurch erzeugt, dass die Sinusfunktion in den einzelnen Quadranten an den Oktantengrenzen gespiegelt wird. In der vorliegenden Schaltungsanordnung wird dies durch eine Inversion des ohnehin für das Auslesen der Funktionswerte dem Speicher 4 zugeführten Adreßcodes durch den steuerbaren Inverter 14 verwirklicht, und zwar wird jede Adresse (Zählerstand des Adreßzählers 2) nach dem Auslesen des zugehörigen Funktionswertes invertiert und damit an der betreffenden Oktantengrenze gespiegelt, so dass als nächstes der Funktionswert zur invertierten Adresse ausgelesen wird, bevor der Adreßzähler zur nächstfolgenden Adresse weiterschaltet. Es wird also grundsätzlich nach dem Auslesen des zu einer Adresse $\underline{n}$ gehörenden Funktionswertes stets erst der zur Adresse $\underline{-n}$ gehörende Funktionswert ausgelesen, bevor der Adreßzähler 2 zur nächstfolgenden Adresse $\underline{n}$ + 1 bzw. $\underline{n}$ -1 fortschaltet.

Die Sinusfunktion und die Cosinusfunktion werden somit im Zeitmultiplexverfahren erzeugt. Damit dies nicht zu einem konstanten Phasenversatz der Sinusfunktion und der Cosinusfunktion gegeneinander führt, wird der zuerst ausgelesene Funktionswert im Zwischenspeicher 18 so lange gehalten, bis der zur inversen Adresse gehörige Funktionswert vorliegt. Beide Funktionswerte werden parallel und zeitgleich durch das Ausgaberegister 19 phasenstarr ausgegeben, und zwar der zuerst ausgelesene Funktionswert an den Digital-zu-Analog-Wandler 5 und der zweite, zur inversen Adresse ausgelesene Funktionswert an den Digital-zu-Analog-Wandler 5′. Die beiden Digital-zu-Analog-Wandler machen aus der Folge der ihnen zugeführten Funktionswerte jeweils eine Sinusform bzw. der Cosinusform stufenförmig angenäherte elektrische Schwingung, welche durch das nachfolgende Tiefpaßfilter 6 bzw. 6′ geglättet wird.

Über die Adreßumschalteinrichtung 3 kann die Zuordnung zwischen dem Adreßzähler 2 und dem Speicher 4 geändert werden, so dass z.B. nur noch jeder zweite, dritte, vierte, fünfte ...... Funktionswert, vorzugsweise nur noch jeder zweite, vierte, achte.... Funktionswert ausgelesen wird. Damit wird die Frequenz des erzeugten Sinussignals verdoppelt bzw. vervierfacht bzw. verachtfacht....; zugleich wird die Anzahl der für die Bildung des Sinussignals bzw. Cosinussignals herangezogenen Stützstellen ausgehend von der maximalen Stützstellenzahl No halbiert bzw. auf ein Viertel bzw. auf ein Achtel ..... herabgesetzt.

Der Oszillator 1 ist so abstimmbar, dass er zwischen den durch die Adreßumschalteinrichtung 3 bestimmten Frequenzstufen eine kontinuierliche Frequenzabstimmung des Sinusgenerators ermöglicht.

Zur Illustration werden nachstehend noch Daten eines verwirklichten, digital gesteuerten Sinusgenerators angegeben:

Frequenzbereich des Sinusgenerators:

$$f_{smin} = 0,1 \text{ kHz.}$$
$$f_{smax} = 10 \text{ kHz.}$$

Abtastfrequenz des Oszillators abstimmbar zwischen fAo = 50 kHz und fAmax = 100 kHz.

Maximale Zahl der Stützstellen pro Periode No $= 2^{10} = 1024$ (10 Bit).

Der Amplitudenbereich der Funktionswerte beträgt $2^{12}$ (12 Bit).

Die Sinusfunktion wird mit ihren Quadranten-Kurvenstücken so in das Wertefeld (10 Bit für die Zeitachse und 12 Bit für den Amplitudenbereich) eingepasst, dass die Quadrantengrenzen immer zwischen zwei benachbarten Werten der Zeitachse liegen.

Die kleinste Zahl der Stützstellen pro Periode beträgt im verwirklichten Ausführungsbeispiel:

$$N_{min} = 16 = 2^4.$$

Die Bereichsumschaltung mittels der Adreßumschalteinrichtung 3 erfolgt gemäß $N = 2^k$, $4 \leq k \leq 10$.

Das Tiefpaßfilter hat eine Grenzfrequenz, welche zwischen der maximalen Frequenz des Sinussignals bzw. Cosinussignals $f_{smax}$ und der kleinsten Abtastfrequenz fAmin des Oszillators 1 liegt. Im gewählten Beispiel beträgt die Grenzfrequenz 12 kHz.

**Patentansprüche**

1. Schaltungsanordnung zum Erzeugen eines elektrischen Sinussignals mit veränderlicher Frequenz durch Unterteilen der Periode des Sinussignals in eine vorgegebene Anzahl $N_o$ von äquidistanten Stützstellen und Nachbilden der Sinusform durch einen Polygonzug mit von Stützstelle zu Stützstelle konstantem Momentanwert,

mit einem Speicher (4) zum Speichern der Momentanwerte auf adressierten Speicherplätzen, die den einzelnen Stützstellen zugeordnet sind,

mit einer mit dem Speicher (4) verbundenen Adreßschaltung (2, 3), welche die gespeicherten Momentanwerte zyklisch abfragt,

mit einem kontinuierlich abstimmbaren Oszillator (1) zum Erzeugen eines Abtastsignals mit der Abtastfrequenz $f_A$, mit welchem die Adreßschaltung (2, 3) getaktet wird,

und mit einem Digital-zu-Analog-Wandler (5), der die Folge der zyklisch abgefragten Momentanwerte umwandelt in eine der Sinusform nachgebildete Schwingung mit entsprechenden Augenblickswerten,

wobei im Speicher (4) lediglich die Momentanwerte für die zwischen einem Nulldurchgang und dem nächsten Extremwert liegenden Stützstellen, also für ein Viertel der Sinusperiode, gespeichert sind,

zum Erzeugen des Sinussignals über eine volle Sinusperiode die Adreßschaltung (2, 3) einen Vorwärts/Rückwärts-Adreßzähler (2) enthält, dessen Zählrichtung zyklisch, nämlich nach jedem Viertel einer Sinusperiode, umgekehrt wird, und zwischen dem Speicher (4) und dem Digital-zu-Analog-Wandler (5) ein steuerbarer Inverter (17) vorgesehen ist, der nach jeder halben Sinusperiode, nämlich bei jedem Nulldurchgang des Sinussignals, das Vorzeichen der abgefragten Momentanwerte umkehrt,

**dadurch gekennzeichnet,**

dass die Adreßschaltung (2, 3) zur stufenweisen Veränderung der Frequenz des Sinussignals eine Adreßumschalteinrichtung (3) aufweist, welche aus dem vorgegebenen Adressenvorrat eine Auswahl in der Weise trifft, dass nur die zu jeder n-ten Stützstelle gehörenden Momentanwerte abgefragt werden, wobei n eine veränderliche ganze Zahl $n \geq 1$ ist,

und wobei zum Erzeugen von Sinussignalen mit Zwischenfrequenzen $f_s$ im Bereich

$$n \cdot f_{smin} < f_s < m \cdot f_{smin}$$

worin m eine ganze Zahl $m > n$ und $f_{smin}$ die niedrigst mögliche Frequenz (Grundfrequenz) des Sinussignals ist, der Oszillator (1) zwischen einer Frequenz

$$f_{AO} = N_o \cdot f_{smin}$$

und der Frequenz $\frac{m}{n} \cdot f_{AO}$ kontinuierlich abstimmbar ist,

und dass die Stützstellen so gelegt sind, dass die Nulldurchgänge und die Extremwerte der Sinuskurve jeweils in der Mitte zwischen zwei benachbarten Stützstellen liegen.

2. Schaltungsanordnung nach Anspruch 1,

dadurch gekennzeichnet, dass die Stützstellen in dem Viertel der Sinusperiode mit den ganzen Zahlen zwischen $-\frac{No}{8}$ und $+\frac{No}{8}$ adressiert sind,

dass dem Adreßzähler (2) folgend ein steuerbarer Inverter (14) vorgesehen ist, der vor dem Weiterschalten des Adreßzählers (2) jede Adressnummer nach dem Abfragen des darunter gespeicherten Momentanwertes invertiert und den unter der inversen Adressnummer gespeicherten Momentanwert abfragt, welche einem zweiten Digital-zu-Analog-Wandler (5') übermittelt wird,

und dass zwischen dem Speicher (4) und dem ersten Digital-zu-Analog-Wandler (5) ein Zwischenspeicher (18) vorgesehen ist, welcher den zuerst ausgelesenen Momentanwert so lange hält, bis der zur inversen Adressnummer gehörende Momentanwert vorliegt, so dass beide zeitgleich an die jeweiligen Digital-zu-Analog-Wandler (5, 5') übermittelt werden.

## Claims

1. A circuit arrangement for producing an electrical sine signal at a frequency that may be varied by dividing the period of the sine signal into a given number No of equidistant plot points and reproducing the sine form by means of a polygon train having a constant instantaneous value from plot point to plot point,

    having a memory (4) for storing the instantaneous values on addressed memory areas, which are assigned to the individual plot points,

    having an address circuit (2, 3) connected to the memory (4), for searching in cycles the instantaneous values stored,

    having a continuously variable oscillator (1) for producing a sweep signal with the operating frequency fA', with which the address circuit (2, 3) is timed,

    and having a digital-to-analogue converter (5), which converts the result of the cyclically selected instantaneous values into a pulse reproducing the sine form with corresponding instantaneous values,

    whereby only the instantaneous values for the plot points lying between the zero throughput and the next extreme value, hence for one quarter of the sine period, are stored in the memory (4),

    whereby in order to produce the sine signal over a full sine period the address circuit (2, 3) contains a forwards/backwards address counter (2), whose counting direction is inverted in cycles, i.e. after each quarter of a sine period, and, between the memory (4) and the digital-to-analogue converter (5), a controllable inverter (17) is provided, which inverts the signature of the selected instantaneous value after each half sine period, i.e. at each zero throughput of the sine signal,

    characterised in that,

    the address circuit (2, 3) has an address reversing device (3) for varying the frequency of the sine signal in steps, which makes a selection from the given store of addresses so that only the instantaneous values belonging to each nth plot point are selected, where n is a variable whole number $n \geqq 1$,

    and whereby in order to produce sine signals with intermediate frequencies $f_s$ in the range

$$n \cdot f_{smin} < f_s < m \cdot f_{smin}$$

where m is a whole number $m > n$ and $f_{smin}$ is the lowest possible frequency (base frequency) of the sine signal, the oscillator (1) is continuously variable between a frequency

$$f_{AO} = N_o \cdot f_{smin}$$

and the frequency $\frac{m}{n} . f_{AO}$,

    and in that the plot points are set so that the zero throughputs and the extreme values of the sine curve lie respectively centred between neighbouring plot points.

2. A circuit arrangement as claimed in claim 1, characterised in that the plot points in the quarter sine period are addressed with the whole numbers between $-\frac{No}{8}$ and $+\frac{No}{8}$, in that the address counter (2) is then provided with a controllable inverter (14), which, before the address counter (2) switches forward, inverts each address number after the instantaneous values stored under it have been searched and searches the instantaneous values stored under the inverse address number, which is transferred to a second digital-to-analogue converter (5'),

    and in that between the memory (4) and the first digital-to-analogue converter (5) a buffer memory (18) is provided, which holds the first instantaneous value selected until the instantaneous value belonging to the inverse address number is available so that both are transmitted to the respective digital-to-analogue converters (5, 5') at the same time.


## Revendications

1. Circuit pour la génération d'un signal sinusoïdal électrique à fréquence variable par division de la période du signal sinusoïdal en un nombre donné $N_o$ de points d'échantillonnage équidistants et par reconstruction de la sinusoïde par une ligne polygonale prenant une valeur instantanée maintenue constante entre deux points d'échantillonnage,

    comportant une mémoire (4) pour le stockage des valeurs instantanées aux adresses des emplacements mémoires qui sont affectés individuellement aux points d'échantillonnage,

    comportant un circuit d'adressage (2, 3) relié à la mémoire (4) et qui balaye de façon cyclique les valeurs instantanées mises en mémoire,

    comportant un oscillateur accordable de façon continue pour la génération d'un signal d'échantillonnage de fréquence d'échantillonnage $f_A$, servant à la synchronisation du circuit d'adressage (2, 3),

comportant un convertisseur digital-analogique (5) qui transforme la suite de valeurs instantanées collectées de façon cyclique en une oscillation de forme sinusoïdale avec des valeurs instantanées correspondantes,

circuit pour lequel ne sont stockées dans la mémoire (4) que les valeurs instantanées correspondant aux points d'échantillonnage compris entre un passage par zéro et la valeur extrême suivante, c'est-à-dire pour un quart de la période, le circuit d'adressage (2, 3) comportant, pour la génération d'un signal sinusoïdal sur la totalité de la période du sinus, un compteur d'adresses progressif-dégressif (2) dont la direction de comptage est inversée de façon cyclique, à savoir après chaque quart de période du sinus, et un inverseur sélectif (17) étant prévu entre la mémoire (4) et le convertisseur digital-analogique (5) pour inverser, après chaque demi-période du sinus c'est-à-dire après chaque passage par zéro du signal sinusoïdal, le signe des valeurs instantanées collectées,

caractérisé en ce que le circuit d'adressage (2, 3) présente, pour la variation par paliers de la fréquence du signal sinusoïdal, un dispositif de commutation d'adresses (3) qui effectue une sélection dans le stock des adresses de façon à ce que seule la valeur instantanée correspondant à chaque n-ième point d'échantillonnage soit collectée, n étant une variable entière telle que $n \geqq 1$,

et en ce que, pour la production de signaux sinusoïdaux de fréquence intermédiaire $f_s$ située dans l'intervalle

$$n \cdot f_{smin} < f_s < m \cdot f_{smin}$$

où m est un entier tel que $m > n$ et $f_{smin}$ la fréquence la plus proche (fréquence de base) du signal sinusoïdal, l'oscillateur (1) est continûment accordable entre une fréquence :

$$f_{AO} = No \cdot f_{smin} \text{ et la fréquence } \frac{m}{n} \cdot f_{AO}$$

et en ce que les points d'échantillonnage sont disposés de façon à ce que le passage par zéro et la valeur extrême de la sinusoïde se situent chacun au milieu de deux points d'échantillonnage successifs.

2.  Circuit selon la revendication 1 caractérisé en ce que les points d'échantillonnage dans le quart de la période du sinus sont adressés avec les entiers relatifs compris entre $-\dfrac{No}{8}$ et $+\dfrac{No}{8}$,

et en ce qu'un inverseur sélectif (14) est prévu à la suite du compteur d'adresses (2) qui, avant la commutation du compteur d'adresses (2), inverse chaque adresse, après la lecture de la valeur instantanée stockée à cette adresse, et lit la valeur instantanée qui est stockée à l'adresse inversée, laquelle valeur instantanée est transmise à un second convertisseur digital-analogique (5'),

et en ce qu'une mémoire intermédiaire (18) est prévue entre la mémoire (4) et le premier convertisseur digital-analogique (5), laquelle mémoire intermédiaire (18) conserve la valeur instantanée lue en premier jusqu'à ce que la valeur instantanée correspondant au numéro d'adresse inversée soit présente de façon à ce que les deux soient transmises en même temps à chaque convertisseur analogique (5, 5').

## FIG. 1

| Zeitachsengenerator mit Steuerlogik | | | |
|---|---|---|---|
| Oszillator 1 | Up/Down 2 Zähler | Adressenum- schaltung 3 | Quadrantenzähler 13 |

8 Bit Adresse       2 Bit Code

| Steuerbarer Inverter 14 | Segmentsteuerung 15 |
|---|---|

8 Bit Adresse

| Amplitudengenerator 4      ROM |
|---|

11 Bit Code

| Steuerbarer Inverter 17 |
|---|

| Zwischenspeicher 18 |
|---|

11 Bit Code       11 Bit Code     MSB's

12 Bit Code       12 Bit Code

| Ausgaberegister 19     Sinus | Cosinus |
|---|---|

12 Bit Code       12 Bit Code

Strobe

| 5    D/A | 5'    D/A |
|---|---|

6       6'

FIG. 2